# EUROPEAN PATENT SPECIFICATION

(11) **EP 2 343 725 B1**
(45) Date of publication and mention of the grant of the patent: **09.11.2016**
(21) Application number: 10181822.7
(22) Date of filing: 29.09.2010
(51) Int. Cl.: H01J 25/02, H01J 25/34

(54) **Terahertz radiation source and method of manufacturing the same**
Terahertz-Strahlungsquelle und Herstellungsverfahren dafür
Source de rayonnement térahertzien et procédé correspondant

(30) Priority: 11.01.2010 KR 20100002382
(43) Date of publication of application: 13.07.2011
(73) Proprietor: Samsung Electronics Co., Ltd., Suwon-si, Gyeonggi-do, 443-742 (KR)
(72) Inventor: Baik, Chan-wook, 449-712, Gyeonggi-do (KR); Lee, Joo-ho, 449-712, Gyeonggi-do (KR); Son, Hyung-bin, 449-712, Gyeonggi-do (KR)
(74) Representative: Greene, Simon Kenneth

(56) References cited:
- US-A1- 2009 096 378
- US-B1- 6 909 104
- US-B1- 6 987 360

## Description

### BACKGROUND

### Field

The present invention relates to monolithic terahertz radiation sources and methods of manufacturing the same, the terahertz radiation sources implemented on a single substrate.

### Description of the Related Art

The terahertz (10¹² Hz) band is relatively important for applications in molecular optics, biological physics, medical science, spectroscopy, image processing, security areas, etc. Though the terahertz band ranges from the microwave band to the optical band, there are only a few radiation sources and amplifiers operating in the terahertz band due to various physical and engineering limitations. Recently, such terahertz band radiation sources and terahertz band amplifiers have been developed by using relatively new concepts and advanced micro processing technologies. A variety of approaches have been used in attempting to increase the frequency at which existing microwave band radiation sources operate or to lower the operating frequency to be within the terahertz band by using optical instruments such as a semiconductor or femtosecond laser. Recently, attempts to manufacture a terahertz band radiation source for generating terahertz electromagnetic waves using micro processing technology have been conducted.

Various prior sub-millimeter and terahertz osillators are proposed in US 6,909,104, US 2009/0096378 and US 6,987,360.

US 6,909,104 discloses a monolithic terahertz radiation source on a single chip according to the preamble of present claim 1.

### SUMMARY

A monolithic terahertz radiation source according to the present invention is defined in present claim 1.

A method of manufacturing a monolithic terahertz radiation source according to the present invention is defined in present claim 13.

Preferred features are specified in the dependent claims.

The cathode may include a field emission type electron beam emitter source, a thermal electron emission type electron beam emitter source, a photo-excitation type electron beam emitter source, or the like.

The oscillating circuit may have a photonic crystal structure in which a plurality of vertically extending portions are arranged in a two-dimensional array. The vertically extending portions may be formed by etching the substrate layer. The output unit may include a slot formed adjacent to the anode in a region where the oscillating circuit is positioned. The slot may penetrate the insulating layer and the substrate layer. In this example, at least one of an arrangement and a shape of the vertically extending portions of the oscillating circuit positioned between the anode and the output unit may be different from one of the vertically extending portions of the oscillating circuit positioned between the output unit and the collector.

According to at least some example embodiments, the vertically extending portions of the oscillating circuit may be arranged to form a waveguide that is folded at least twice (e.g., when seen from the top). An end of the folded-waveguide may be open to the outside to form the output unit.

The oscillating circuit may have a folded waveguide resonance structure such that the oscillating circuit crosses a path of an electron beam a plurality of times. The oscillating circuit may be formed by etching the substrate layer in a relatively long groove shape folded at least twice. An end of the groove may be open to the outside to form the output unit.

The oscillating circuit may be formed by etching the substrate layer to have a coupled-cavity resonance structure including a plurality of cavities arranged at both sides of the oscillating circuit with a path between the cavities, and a plurality of connecting portions connecting the cavities. An electron beam may pass along the path, and an end of the cavities may be open to the outside.

The oscillating circuit may have at least one selected from the group including a photonic crystal structure, a nano resonance structure, a coupled-cavity resonance structure, a folded-waveguide resonance structure, a spiral oscillating structure, a groove structure, a forward wave structure, a surface plasmon exciting structure and a meta-material structure for oscillating terahertz electromagnetic wave.

The terahertz radiation source may further include a cover covering the oscillating circuit. The cover may include at least a second oscillating circuit having a structure symmetrical with regard to the oscillating circuit.

The terahertz radiation source may further include a cover for covering the cathode, the anode, the collector and the oscillating circuit.

The terahertz radiation source may further include a cover having a structure symmetrical with regard to the terahertz radiation source.

At least one of the cathode, the anode, the collector and the oscillating circuit may include a metal layer coated on the etched substrate layer.

The insulating layer and the substrate layer may be layers of a silicon on insulator (SOI) substrate.

### BRIEF DESCRIPTION OF THE DRAWINGS

Example embodiments will become more apparent from the following description of the accompanying drawings in which:
FIG. 1 is a schematic perspective view of a terahertz radiation source according to an example embodiment;
FIG. 2 is a cross-sectional side view of the terahertz radiation source in FIG. 1 taken along line I-I;
FIG. 3 is a view for describing an example operation of an electron beam emitting surface 151 of the terahertz radiation source in FIG. 1;
FIG. 4 is a schematic cross-sectional side view illustrating a terahertz radiation source according to another example embodiment;
FIG. 5 is a schematic top plane view illustrating a terahertz radiation source according to yet another example embodiment;
FIG. 6 is a schematic top plane view illustrating a terahertz radiation source according to still another example embodiment;
FIG. 7 is a schematic top plane view illustrating a terahertz radiation source according to another example embodiment; and
FIGS. 8A through 8G are views for describing a method of manufacturing a terahertz radiation source according to an example embodiment.

### DETAILED DESCRIPTION

Example embodiments will now be described more fully with reference to the accompanying drawings, in which some example embodiments are shown. In the drawings, the thicknesses of layers and regions are exaggerated for clarity. Like reference numerals in the drawings denote like elements.

Detailed illustrative embodiments are disclosed herein. However, specific structural and functional details disclosed herein are merely representative for purposes of describing example embodiments. Example embodiments may, however, may be embodied in many alternate forms and should not be construed as limited to only the example embodiments set forth herein.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed items.

When an element is referred to as being "connected," or "coupled," to another element, the element may be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular example embodiments only and is not intended to be limiting. As used herein, the singular forms "a," "an," and "the," are intended to include the plural forms as well, unless the context clearly indicates otherwise. Further, the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

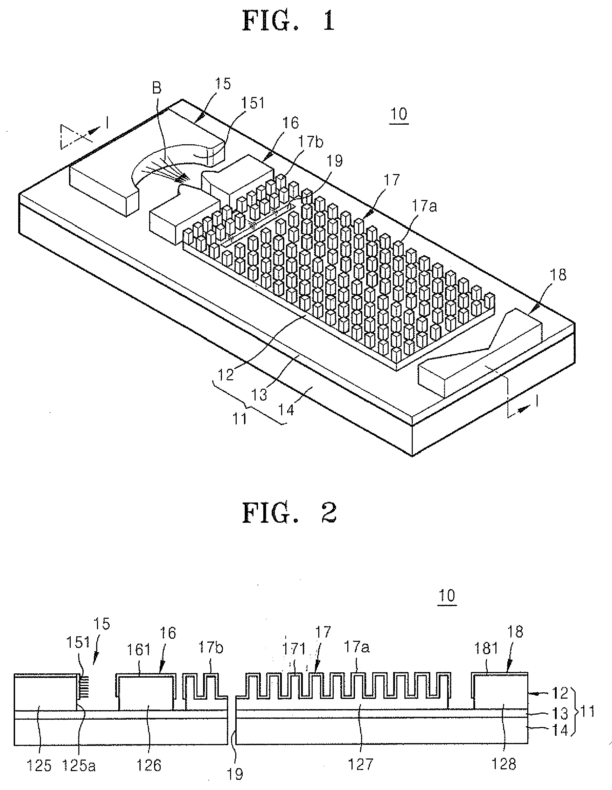

FIG. 1 is a schematic perspective view of a terahertz radiation source 10 according to an example embodiment. FIG. 2 is a cross-sectional side view of the terahertz radiation source 10 in FIG. 1 taken along line I-I.

Referring to FIGS. 1 and 2, the terahertz radiation source 10 includes an oscillating element layer having a monolithic on-chip structure. The oscillating element layer is formed by etching a part of a substrate 11. In the example embodiment shown in FIG. 1, the oscillating element layer includes: a cathode 15, a plurality of (e.g., two) anodes 16, an oscillating circuit 17, a collector 18 and an output unit 19. As discussed herein the anodes 16 may be referred to as anode 16. Moreover, the anode 16 may include two or more anodes, or may be composed of a single anode structure.

The substrate 11 includes: an insulating layer 13 and a substrate layer 12 provided on the insulating layer 13. The insulating layer 13 is supported by a separate supporting layer 14. The substrate 11 may be a silicon-on-insulator (SOI) substrate. The oscillating element layer including the cathode 15, the anodes 16, the oscillating circuit 17, and the collector 18 are formed monolithically by etching the substrate layer 12. The cathode 15, the anodes 16, the oscillating circuit 17, and the collector 18 are separated from one another on the insulating layer 13, and thus, are electrically insulated from one another.

The cathode 15 is an electrode including an electron beam emitting surface 151 provided on a vertical surface 125a of a cathode region 125 of the substrate layer 12. The electron beam emitting surface 151 emits an electron beam B. In one example, a voltage (e.g., negative voltage) is applied to the cathode 15 by a wiring circuit (not shown) to emit the electron beam B. The cathode 15 shown in FIG. 2 may include a carbon nanotube as an electron beam emitter source. Also, the cathode 15 may include a well-known electron beam emitter source such as a thermal electron emission type emitter, a photo-excitation type emitter or the like.

The electron beam emitting surface 151, which is perpendicular to the substrate 11, is a concave surface with respect to an emission direction of the electron beam B.

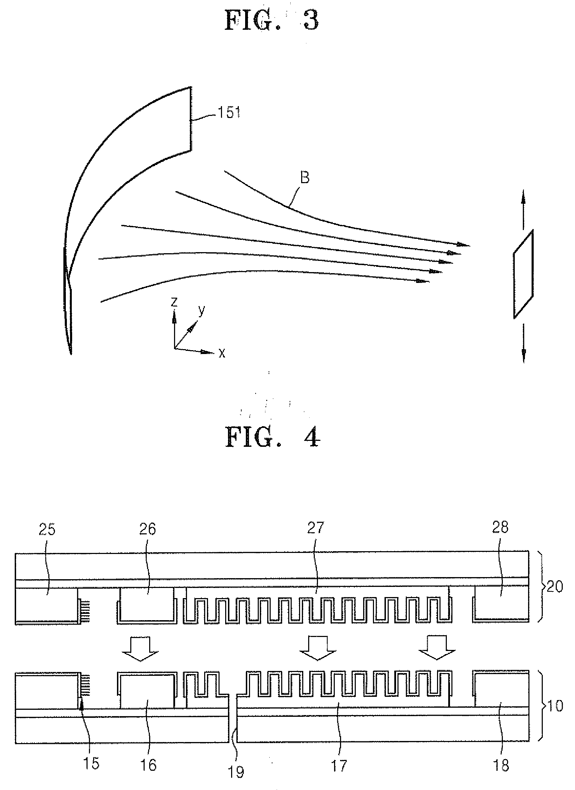

FIG. 3 is a view for describing an example operation of the electron beam emitting surface 151 of the terahertz radiation source 10 in FIG. 1

Referring to FIG. 3, the electron beam emitting surface 151 is perpendicular to an x-y plane and also to a surface of the substrate 11. In this example embodiment, the electron beam emitting surface 151 is a two-dimensional surface curved around a z-axis, which is perpendicular to the x-y plane. The electron beam B emitted from the electron beam emitting surface 151 moves in an x direction and is focused. The amount of focus of the electron beam B may vary according to the curvature of the electron beam emitting surface 151. As such, the electron beam B reaching the anode 16 (see, FIG. 1) may have a sheet beam shape because the electron beam emitting surface 151 is formed as a curved surface. The sheet beam shape allows the electron beam B to be more easily focused by the anode 16. Furthermore, a shape of a cross-section of the electron beam B is not limited in a vertical direction and is only limited in a horizontal direction because the terahertz radiation source 10 has a structure in which an upper portion of the substrate 11 is open. Thus, unlike a conventional terahertz radiation source having an electron beam tunnel in which the size of an electron beam B is limited vertically and generating a relatively high frequency electromagnetic wave is relatively difficult, the terahertz radiation source 10 is free or substantially free from limitation of an area condition of a minimum electron beam for generating a relatively high frequency electromagnetic wave.

Referring back to FIGS. 1 and 2, the anode 16 is adjacent to the electron beam emitting surface 151 of the cathode 15 and controls the electron beam B emitted from the cathode 15. The anode 16 may be formed by coating a metal layer 161 on an anode region 126 that is formed by etching the substrate layer 12. The anode 16 may have a shape capable of forming a distribution of an electric field so that the electron beam B emitted from the electron beam emitting surface 151 is focused by a potential difference of the electric field distribution. For example, as illustrated in FIG. 1, an anode 16 may be provided at each side of the oscillating circuit 17 with a path for the electron beam B there between. More specifically, in the example embodiment shown in FIG. 1, the path adjacent to the cathode 15 is wider than the path adjacent to the oscillating circuit 17. The structure of the anode 16 allows the electron beam B to be more easily focused. A positive voltage may be applied to the anode 16, or the anode 16 may be grounded by a wiring circuit (not shown).

Still referring to FIGS. 1 and 2, the oscillating circuit 17 is provided along the path of the electron beam B that passes through the anode 16. An electromagnetic wave oscillates in the oscillating circuit 17 due to the passing electron beam B. The oscillating circuit 17 has a photonic crystal structure including a plurality of vertically extending portions 17a and 17b arranged in a two-dimensional array. As the electron beam B passes through the vertically extending portions 17a and 17b, the electron beam B transfers the energy of the vertically extending portions 17a and 17b to the electromagnetic wave due to a periodical photonic crystal structure of the vertically extending portions 17a and 17b. Then, the electromagnetic wave exits the plurality of vertically extending portions 17a and 17b, thereby generating a terahertz electromagnetic wave. In this example, a wavelength of the oscillating electromagnetic wave may be determined according to a speed of the electron beam B and/or according to a photonic crystal structure of the oscillating circuit 17. In one example, the wavelength of the oscillating electromagnetic wave is determined according to a period, shape, and/or size of the vertically extending portions 17a or 17b. When the vertically extending portion 17a has a nano size (e.g., several tens of nanometers (nm)), the oscillating circuit 17 may be referred to as a nano resonance structure.

Referring back to FIG. 2, the oscillating circuit 17 may be formed by coating the metal layer 171 on a oscillating circuit region 127 of the substrate layer 12 in which the vertically extending portions 17a and 17b are patterned in a two-dimensional array. The oscillating circuit 17 may be grounded by a wiring circuit (not shown) or may be connected to the anode 16 via a common power source (not shown). Under different conditions, the vertically extending portions 17a and 17b may be formed of the substrate layer 12 itself without the metal layer 171. In this example, the vertically extending portions 17a and 17b may be formed of, for example, silicon or the like. In FIG. 1 the vertically extending portions 17a and 17b have a square column shape, but example embodiments are not limited thereto. For example, the vertically extending portions 17a and 17b may have a cylindrical shape or various other column shapes.

Still referring to FIGS. 1 and 2, the collector 18 faces the cathode 15 with the oscillating circuit 17 interposed there between. The collector 18 collects the electron beam B that has lost energy while passing through the oscillating circuit 17. The collector 18 may collect energy of the electron beam B remaining after interaction between the electron beam B and the electromagnetic wave or may suppress (e.g., prevent) the electron beam B from affecting other components. The collector 18 may be an electrode formed by coating a metal layer 181 on a collector region 128 of the substrate layer 12 etched in a given, desired or predetermined pattern. A positive voltage may be applied to the collector 18, or the collector 18 may be grounded by a wiring circuit (not shown).

The output unit 19 couples the electromagnetic waves oscillating in the oscillating circuit 17 and emits the electromagnetic wave to the outside (e.g., to an external device). The output unit 19 is formed in a slot shape penetrating the substrate 11 and to be adjacent to the anode 16. The output unit 19 may also be formed in a rectangular shape. In this example, the lengthwise direction of the rectangular shape is perpendicular or substantially perpendicular to a travelling direction of the electron beam B. Under different conditions, the output unit 19 may include a plurality of slots. The output unit 19 suppresses and/or prevents the electromagnetic wave, oscillating in the oscillating circuit 17 and moving backwards from the collector 18 to the cathode 15, from moving towards the cathode 15, and outputs the electromagnetic wave below the substrate 11. An arrangement (e.g., an arrangement period, an arrangement pattern, etc.) and a shape (e.g., an aspect ratio, a size, a shape of a cross-section, etc.) of the vertically extending portion 17b positioned between the output unit 19 and the anode 16 are different from those of the vertically extending portion 17a positioned between the output unit 19 and the collector 18, and thus backward moving of the electromagnetic wave may be effectively suppressed and/or prevented near the output unit 19. This may improve an extraction efficiency of the electromagnetic wave. A waveguide may be provided under the substrate 11 (e.g., under a portion where the output unit 19 is formed) to couple the electromagnetic waves having passed through the output unit 19 and induce the electromagnetic waves to the outside.

The terahertz radiation source 10 according to at least this example embodiment has a structure in which an upper portion of the oscillating element layer is open, but example embodiments are not limited thereto as discussed in more detail below with regard to FIG. 4.

FIG. 4 is a schematic cross-sectional side view illustrating a terahertz radiation source according to another example embodiment.

The terahertz radiation source 10 shown in FIG. 4 is similar to the terahertz radiation source shown in FIG. 1, except that a cover 20 is attached to an upper portion of the terahertz radiation source 10. As illustrated in FIG, 4, the cover 20 may have substantially the same structure as the terahertz radiation source 10 described with reference to FIGS. 1 through 3, except that the cover 20 does not include a slot or output unit 19.

The cover 20 includes: a second cathode 25, a second anode 26, a second oscillating circuit 27 and a second collector 28, which are the same or substantially the same as the corresponding components of the terahertz radiation source 10 described with reference to FIGS. 1 through 3.

The cover 20 is not limited to the structure illustrated in FIG. 4. For example, the cover 20 may be a flat substrate, which does not have any resonance structure and covers the overall upper portion of the terahertz radiation source. Alternatively, the cover may have a structure covering only a portion (e.g., the oscillating circuit 17) of the terahertz radiation source 10. In one example, the cover 20 may include only the second oscillating circuit 27 having a symmetrical structure with respect to the oscillating circuit 17 of the terahertz radiation source 10 or may be a flat or substantially flat substrate covering only the oscillating circuit 17.

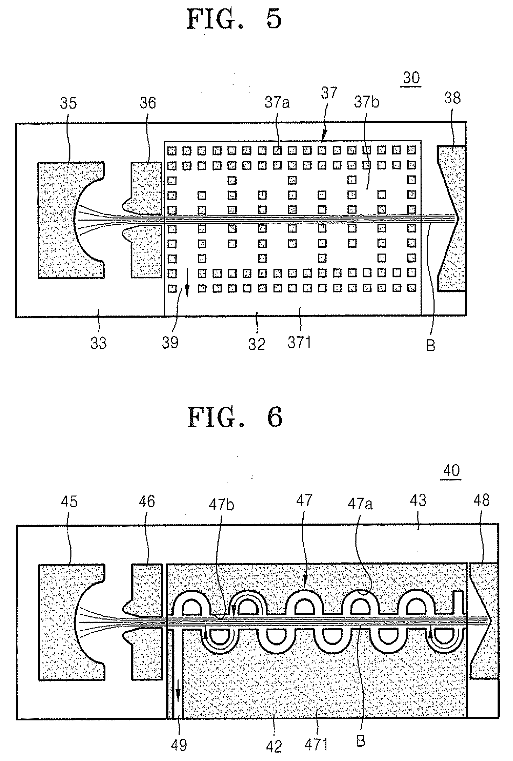

FIG. 5 is a schematic top plane view illustrating a terahertz radiation source 30 according to another example embodiment.

Referring to FIG. 5, the terahertz radiation source 30 includes an oscillating element layer provided on an insulating layer 33. The oscillating element layer includes: a cathode 35, an anode 36, an oscillating circuit 37, a collector 38, and an output unit 39. The insulating layer 33 may be an intermediate layer of a substrate, similar or substantially similar to the example embodiments described with reference to FIGS. 1 and 2. The oscillating element layer including the cathode 35, the anode 36, the oscillating circuit 37, the collector 38, and the output unit 39 may be formed by etching the substrate layer 32 provided on the insulating layer 33.

According to at least this example embodiment, the oscillating circuit 37 has a photonic crystal structure of a folded-waveguide 37b formed by a plurality of vertically extending portions 37a. The vertically extending portions 37a may be formed by etching the substrate layer 37 to a given, desired or predetermined depth and then coating a metal layer 371 on the etched substrate layer 32. The folded-waveguide 37b may be folded at least twice when viewed from the top.

The vertically extending portions 37a are arranged on a region of the oscillating circuit 37, except the region where the folded-waveguide 37b is defined. An end of the folded-waveguide 37b is open to the outside to form the output unit 39. The folded-waveguide 37b guides the electromagnetic wave generated in the vertically extending portions 37a and emits the electromagnetic wave to the output unit 39. The terahertz radiation source 30 according to at least this example embodiment includes the output unit 39 formed by the folded-waveguide 37b of the oscillating circuit 37. Thus, components of the terahertz radiation source 30 may be substantially the same as the corresponding components of the terahertz radiation source described with reference to FIGS. 1 through 3, except for the output structure. The terahertz radiation source 30 according to at least this example embodiment does not include a slot, but rather the output unit 39 is formed by the folded-waveguide 37.

The terahertz radiation source 30 has a structure in which an upper portion of the oscillating element layer is open. However, the upper portion of the oscillating element layer may be covered by a cover similar to the example embodiment described with reference to FIG. 4. The cover may have a symmetrical structure with respect to the terahertz radiation source 30 or may be a flat substrate. Alternatively, the cover may cover only a portion of the terahertz radiation source. For example, the cover may have a second oscillating circuit that is symmetrical with respect to the oscillating circuit 37 for covering only the oscillating circuit 37, or may be a flat substrate for covering only the oscillating circuit 37.

FIG. 6 is a schematic top plane view illustrating a terahertz radiation source 40 according to another example embodiment.

Referring to FIG. 6, the terahertz radiation source 40 includes an oscillating element layer provided on an insulating layer 43. The oscillating element layer includes: a cathode 45, an anode 46, an oscillating circuit 47, a collector 48, and an output unit 49. The cathode 45, the anode 46 and the collector 48 may be the same or substantially the same as the corresponding components of the example embodiment described above with reference to FIGS. 1 through 3. The insulating layer 43 may be an intermediate layer of a substrate, similar to the above-described example embodiments. The oscillating element layer including the cathode 45, the anode 46, the oscillating circuit 47, the collector 48, and the output unit 49 may be formed by etching a substrate layer 42 provided on the insulating layer 43.

According to at least this example embodiment, the oscillating circuit 47 has a folded waveguide oscillating structure including a folded waveguide 47a crossing the path 47b a plurality of times. An electron beam B passes along the path 47b. The folded waveguide oscillating structure may be formed by etching the substrate layer 42 to have the folded waveguide 47a and the path 47b for the electron beam B. The folded waveguide oscillating structure further includes a metal layer 471 coated on the etched substrate layer 42. An end of the oscillating circuit 47 is open to the outside to form the output unit 49. The oscillating circuit 47 having the folded waveguide resonance structure may be a traveling wave type electromagnetic wave oscillating structure. The folded waveguide resonance structure of the oscillating circuit 47 guides an electromagnetic wave generated in the oscillating circuit 47 and emits the electromagnetic wave through the output unit 49.

The terahertz radiation source 40 may have a structure in which an upper portion of the oscillating element layer is open, but example embodiments are not limited thereto. Rather, the upper portion of the terahertz radiation source 40 may be covered by a cover, similar to the example embodiments described above. In one example, the cover may have a symmetrical structure with respect to the terahertz radiation source 40. Alternatively, the cover may include only a second oscillating circuit having a symmetrical structure with respect to the oscillating circuit 47, or may be a flat substrate.

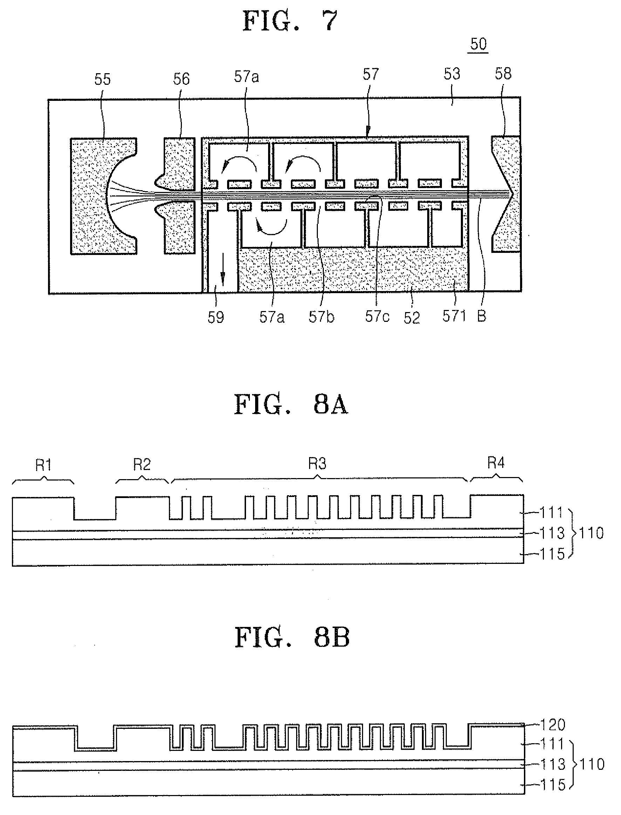

FIG. 7 is a schematic top plane view illustrating a terahertz radiation source 50 according to another example embodiment.

Referring to FIG. 7, the terahertz radiation source 50 includes an oscillating element layer provided on an insulating layer 53. The oscillating element layer includes: a cathode 55, an anode 56, an oscillating circuit 57, a collector 58, and an output unit 59. The cathode 55, the anode 56 and the collector 58 may be substantially the same as the corresponding components of example embodiments described above with reference to FIGS. 1 through 3. The insulating layer 53 may be an intermediate layer of a substrate, similar to the above-described example embodiments. The oscillating element layer including the cathode 55, the anode 56, the oscillating circuit 57, the collector 58, and the output unit 59 may be formed by etching a substrate layer 52 provided on the insulating layer 53.

The oscillating circuit 57 of at least this example embodiment has a coupled-cavity resonance structure including a plurality of cavities 57a, which are arranged at each side of the oscillating circuit 57. A path 57c is formed between the cavities 57a, and a plurality of connecting portions 57b connect the cavities 57a. An electron beam B passes along the path 57c. The coupled-cavity resonance structure of the oscillating circuit 57 may be formed by etching the substrate layer 52 in a coupled-cavity pattern and then coating a metal layer 571 on the etched substrate layer 52. The cavity 57a, the connecting portion 57b, and the path 57c of the electron beam B may have different depths. An end of the oscillating circuit 57 is open to the outside to form the output unit 59. In example operation, an electromagnetic wave resonating in the cavity 57a and the connecting portion 57b is emitted to the output unit 59.

The terahertz radiation source 50 may have a structure in which an upper portion of the oscillating element layer is open, but example embodiments are not limited thereto. Rather, the upper portion of the oscillating element layer may be covered by a cover, similar to the example embodiment described above with reference to FIG. 4. In this example, the cover may have a symmetrical coupled-cavity resonance structure or may be a flat substrate.

Various oscillating structures, such as a nano resonance structure, a spiral oscillating structure, a surface plasmon exciting structure or a metamaterial structure, are well-known. Such oscillating structures may be used instead of the oscillating circuits of the terahertz radiation sources of the above-mentioned example embodiments.

The above-mentioned example embodiments describe only cases where a terahertz electromagnetic wave oscillates in the terahertz radiation source, but example embodiments are not limited thereto. One of ordinary skill in the art would understand that the terahertz radiation sources of the above-mentioned example embodiments may be used as a terahertz amplifier configured to input an external electromagnetic wave to an oscillating circuit and amplify the external electromagnetic wave.

FIGS. 8A through 8G are views for describing a method of manufacturing a terahertz radiation source according to an example embodiment.

Referring to FIG. 8A, a substrate 110 is prepared. The substrate 110 may be an SOI substrate and may include a substrate layer 111, a supporting layer 115, and an insulating layer 113 interposed between the substrate layer 111 and the supporting layer 115 so as to attach the substrate layer 111 and the supporting layer 115 to each other. The substrate layer 111 may be formed using a mask patterning process on a plurality of (e.g., four) divided regions of the substrate layer 111 (e.g., a cathode region R1, an anode region R2, an oscillating circuit region R3 and a collector region R4), and then etching the regions using a deep reactive ion etching (DRIE) method. In this example, the substrate layer 111 may be etched to a depth at which electromagnetic wave oscillates (e.g., a depth less than that of the substrate layer 111).

As illustrated in FIG. 8B, a metal layer 120 is formed on the etched substrate layer 111 by electron beam deposition, sputtering, plating, etc. The metal layer 120 may be formed of a metal such as Au, Cr, Cu, Ti, Mo, Al, or the like.

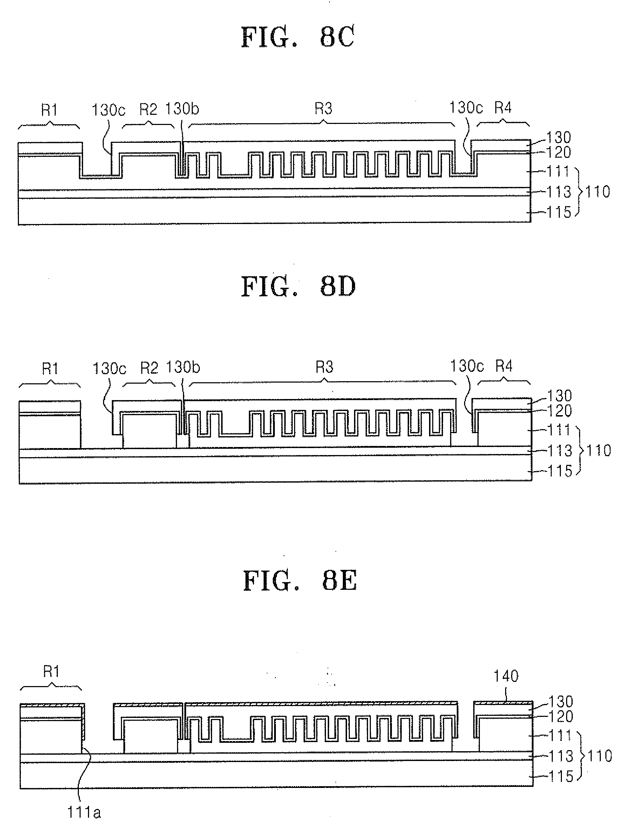

As illustrated in FIG. 8C, an upper surface of the substrate layer 111 is covered by a photo resist 130 such that the etched portion is filled and only regions formed in gaps between the cathode region R1, the anode region R2, the oscillating circuit region R3 and the collector region R4 are exposed and developed, thereby removing a part of the photo resist 130.

As illustrated in FIG. 8D, portions of the metal layer 120, formed on portions 130a, 130b and 130c where the photoresists are removed, are etched and removed. The substrate layer 111 is then etched until an insulating layer 113 is exposed, and thus the cathode region R1, the anode region R2, the oscillating circuit region R3 and the collector region R4 are insulated from one another.

As illustrated in FIG. 8E, a catalyst layer 140 is provided on the substrate layer 111 including a vertical surface 111 a of the cathode region R1. The catalyst layer 140 may be formed of a metal such as Co, Ni, Fe, or Invar in which a carbon nano tube may be synthesized.

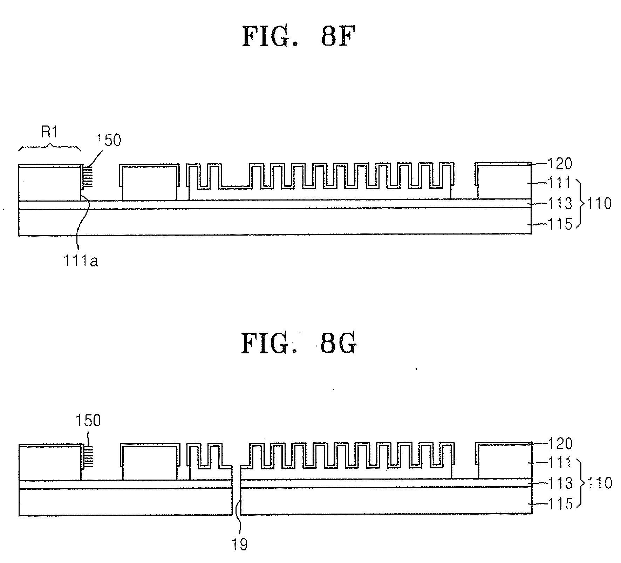

As illustrated in FIG. 8F, the catalyst layer 140 is removed, except for only the portion of the catalyst layer 140 provided on the vertical surface 111a of the cathode region R1, and the photo resist 130 is also removed. A carbon nano tube 150 is grown on the basis of the catalyst layer 140 provided on the vertical surface 111 a of the cathode region R1 of the substrate layer 111 by chemical vapor deposition (CVD).

The carbon nano tube 150 is an example of an electron beam emitter source of a cathode. If the cathode is a thermal electron emission type, an electron beam emitter source formed of a material having a relatively low work function may be provided on the vertical surface 111a of the substrate layer 111. In alternative example embodiments, an electron beam emitter source formed of other various materials may be used.

As illustrated in FIG. 8G, an output unit 190 is formed as a slot penetrating the substrate 110 in the oscillating circuit region R3. The slot may be formed by performing a backside processing on the substrate 110.

According to at least some example embodiments, a cathode, an anode, an oscillating circuit, and a collector are formed on a single substrate in a monolithic on-chip structure so that a complicated mechanical/magnetic alignment, which has been required in a conventional micro processing technology, may be simplified. Also, the terahertz radiation sources and methods of manufacturing terahertz radiation sources of the above-mentioned example embodiments facilitate a lithography process and alignment requiring intricacy as a frequency of electromagnetic wave increases. Furthermore, the terahertz radiation sources and methods of manufacturing the terahertz radiation sources of example embodiments may be realized through a relatively simple process such as a process for etching a substrate and/or a process for forming a metal layer.

It should be understood that the example embodiments described therein should be considered in a descriptive sense only and not for purposes of limitation.

## Claims

1. A monolithic terahertz radiation source on a single chip comprising:
a cathode (15,35,45,55) configured to emit an electron beam;
an anode (16,36,46,56) configured to focus the electron beam emitted from the cathode;
a collector (18,38,48,58) configured to collect the emitted electron beam focused by the anode;
an oscillating circuit (17,37,47,57) positioned between the anode and the collector, the oscillating circuit being configured to convert energy of the emitted passing electron beam into electromagnetic wave energy; and
an output unit (19,39,49,59) configured to externally emit the electromagnetic wave energy;
wherein the cathode, the anode, the collector, the oscillating circuit and the output unit are provided as a monolithic etched substrate layer (12) on an insulating layer (13);**characterised in that** an electron beam emitting surface (151) of the cathode is perpendicular to the substrate layer (12,32,42,52), and wherein the electron beam emitting surface (151) is concave with respect to an emission direction of the electron beam and the electron beam emitting surface (151) is a two-dimensional surface curved around an axis which is perpendicular to the substrate layer.

2. The terahertz radiation source of claim 1, wherein the cathode (15,35,45,55) comprises:
one selected from the group including a field emission type electron beam emitter source, a thermal electron emission type electron beam emitter source, and a photo-excitation type electron beam emitter source.

3. The terahertz radiation source of any preceding claim, wherein the oscillating circuit (17,37) has a photonic crystal structure in which a plurality of vertically extending portions (17a,17b,37a) are arranged in a two-dimensional arrayand optionally wherein at least one of an arrangement and a shape of the vertically extending portions (17a,17b) of the oscillating circuit positioned between the anode and the output unit is different from at least one of the vertically extending portions of the oscillating circuit positioned between the output unit and the collector.

4. The terahertz radiation source of claim 3, wherein the vertically extending portions (37a) of the oscillating circuit are arranged to form a waveguide (37b) that is folded at least twice, and an end of the folded-waveguide is open to the outside to form the output unit.

5. The terahertz radiation source of any preceding claim, wherein the output unit (16,36,46,56) comprises:
a slot formed adjacent to the anode in a region where the oscillating circuit is positioned; wherein
the slot penetrates the insulating layer (13) and the substrate layer (12).

6. The terahertz radiation source of any preceding claim, wherein the oscillating circuit (17,37,47,57) has at least one selected from the group including of a photonic crystal structure, a nano resonance structure, a coupled-cavity resonance structure, a folded-waveguide resonance structure, a spiral oscillating structure, a groove structure, a forward wave structure, a surface plasmon exciting structure and a meta-material structure for oscillating a terahertz electromagnetic wave.

7. The terahertz radiation source of any of claims 1 to 5, wherein the oscillating circuit (47) has a folded waveguide resonance structure such that the oscillating circuit crosses a path of an electron beam a plurality of times, and wherein the oscillating circuit has a groove shape folded at least twice, and an end of the groove is open to the outside to form the output unit.

8. The terahertz radiation source of any of claims 1 to 5, wherein the oscillating circuit (57) has a coupled-cavity resonance structure comprising:
a plurality of cavities (57a) arranged at each side of the oscillating circuit with a path between the cavities; and
a plurality of connecting portions (57b) connecting the cavities; wherein
an electron beam passes along the path, and
an end of the cavities is open to the outside.

9. The terahertz radiation source of any preceding claim, further comprising:
a cover (20) covering the oscillating circuit and optionally covering at least the cathode, the anode, the collector, and the oscillating circuit.

10. The terahertz radiation source of claim 9, wherein the cover comprises:
a second oscillating circuit (27) having a symmetrical structure with respect to at least the oscillating circuit (17).

11. The terahertz radiation source of any preceding claim, wherein at least one of the cathode (15,35,45,55), the anode (16,36,46,56), the collector (18,38,48,58), and the oscillating circuit (17,37,47,57) includes a metal layer coated on an etched substrate layer.

12. The terahertz radiation source of any preceding claim, wherein the insulating layer and the substrate layer are layers of a silicon on insulator (SOI) substrate.

13. A method of manufacturing a monolithic terahertz radiation source, the method comprising:
etching a substrate layer (111) formed on an insulating layer (113) to form an oscillating element layer, wherein the etching includes forming in the oscillating element layer a cathode region (R1) providing a cathode (15, 35, 45, 55) configured to emit an electron beam; an anode region (R2) providing an anode (16, 36, 46, 56) configured to focus the electron beam emitted from the cathode; an oscillating circuit region (R3) providing an oscillation circuit (17, 37, 47, 57) positioned between the anode and the collector, the oscillating circuit being configured to convert energy of the emitted electron beam into electromagnetic wave energy; and a collector region (R4) providing a collector (18, 38, 48, 58) configured to collect the emitted electron beam focused by the anode;
an output unit (19, 39, 49, 59) configured to externally emit the electromagnetic wave energy; and
forming an electron beam emitter source (150) for generating the electron beam in the cathode region of the substrate layer; and
**characterised in that** an electron beam emitting surface (151) of the cathode, providing the electron beam emitter source, is perpendicular to the substrate layer, and wherein the electron beam emitting surface (151) is concave with respect to an emission direction of the electron beam and the electron beam emitting surface (151) is a two-dimensional surface curved around an axis which is perpendicular to the substrate layer.

14. The method of claim 13, wherein the forming of the oscillating element layer comprises:
dividing and etching the substrate layer into the cathode region (R1), the anode region (R2), the oscillating circuit region (R3), and the collector region;
coating a metal layer (120) on the cathode region and the anode region; and
etching a portion of the substrate layer (111), except for the cathode region, the anode region, the oscillating circuit region, and the collector region, until a portion of the insulating layer (113) is exposed.

15. The method of claim 14 further comprising patterning the oscillating circuit region (R3) to have at least one selected from the group including a photonic crystal structure, a nano resonance structure, a coupled-cavity resonance structure, a folded-waveguide resonance structure, a spiral oscillating structure, a groove structure, a forward wave structure, a surface plasmon exciting structure and a meta-material structure for oscillating a terahertz electromagnetic wave.

## Patentansprüche

1. Monolithische Terahertz-Strahlungsquelle auf einem einzelnen Chip, umfassend:
eine Kathode (15, 35, 45, 55), die so gestaltet ist, dass sie einen Elektronenstrahl emittiert;
eine Anode (16, 36, 46, 56), die so gestaltet ist, dass sie den von der Kathode emittierten Elektronenstrahl fokussiert;
einen Kollektor (18, 38, 48, 58), der so gestaltet ist, dass er den durch die Anode fokussierten, emittierten Elektronenstrahl sammelt;
einen Schwingkreis (17, 37, 47, 57), der zwischen der Anode und dem Kollektor positioniert ist, wobei der Schwingkreis so gestaltet ist, dass er Energie des emittierten, passierenden Elektronenstrahls in elektromagnetische Wellenenergie umwandelt; und
eine Ausgabeeinheit (19, 39, 49, 59), die so gestaltet ist, dass sie extern die elektromagnetische Wellenenergie emittiert;
wobei die Kathode, die Anode, der Kollektor, der Schwingkreis und die Ausgabeeinheit als eine monolithische, geätzte Substratschicht (12) auf einer isolierenden Schicht (13) bereitgestellt sind; **dadurch gekennzeichnet, dass** eine Elektronenstrahl emittierende Oberfläche (151) der Kathode senkrecht zu der Substratschicht (12, 32, 42, 52) ist, und wobei die Elektronenstrahl emittierende Oberfläche (151) konkav ist in Bezug auf die Emissionsrichtung des Elektronenstrahls, und wobei die Elektronenstrahl emittierende Oberfläche (151) eine zweidimensionale Oberfläche ist, die um eine Achse gekrümmt ist, die senkrecht zu der Substratschicht ist.

2. Terahertz-Strahlungsquelle nach Anspruch 1, wobei die Kathode (15, 35, 45, 55) folgendes umfasst:
ein Element, das ausgewählt ist aus der Gruppe bestehend aus einer Feldemissions-Elektronenstrahl-Emitterquelle, einer thermischen Elektronenemissions-Elektronenstrahl-Emitterquelle und einer Photoanregungs-Elektronenstrahl-Emitterquelle.

3. Terahertz-Strahlungsquelle nach einem der vorstehenden Ansprüche, wobei der Schwingkreis (17, 37) eine photonische Kristallstruktur aufweist, in welcher mehrere sich vertikal erstreckende Abschnitte (17a, 17b, 37a) in einer zweidimensionalen Anordnung angeordnet sind, und wobei sich optional wenigstens eine Anordnung oder eine Form der sich vertikal erstreckenden Abschnitte (17a, 17b) des Schwingkreises, positioniert zwischen der Anode und der Ausgangseinheit, von wenigstens einem der sich vertikal erstreckenden Abschnitte des Schwingkreises unterscheidet, der zwischen der Ausgabeeinheit und dem Kollektor positioniert ist.

4. Terahertz-Strahlungsquelle nach Anspruch 3, wobei die sich vertikal erstreckenden Abschnitte (37a) des Schwingkreises so angeordnet sind, dass sie einen Wellenleiter (37b) bilden, der wenigstens zweimal gefaltet ist, und wobei ein Ende des gefalteten Wellenleiters zu der Außenseite offen ist, so dass die Ausgabeeinheit gebildet wird.

5. Terahertz-Strahlungsquelle nach einem der vorstehenden Ansprüche, wobei die Ausgabeeinheit (16, 36, 46, 56) folgendes umfasst:
einen Schlitz, der angrenzend an die Anode in einer Region ausgebildet ist, wo sich der Schwingkreis befindet; wobei
der Schlitz die isolierende Schicht (13) und die Substratschicht (12) penetriert.

6. Terahertz-Strahlungsquelle nach einem der vorstehenden Ansprüche, wobei der Schwingkreis (17, 37, 47, 57) wenigstens einer Strukturen aufweist, die ausgewählt ist aus der Gruppe bestehend aus einer photonischen Kristallstruktur, einer Nanoresonanzstruktur, einer Resonanzstruktur mit gekoppelten Resonatoren, einer Resonanzstruktur mit gefaltetem Wellenleiter, einer spiralförmigen Schwingstruktur, einer Rillenstruktur, einer Vorwärtswellenstruktur, einer Oberflächenplasmon-Anregungsstruktur und einer Metamaterialstruktur zum Oszillieren einer elektromagnetischen Terahertz-Welle.

7. Terahertz-Strahlungsquelle nach einem der Ansprüche 1 bis 5, wobei der Schwingkreis (47) eine Resonanzstruktur mit gefaltetem Wellenleiter aufweist, so dass der Schwingkreis einen Pfad eines Elektronenstrahls mehrmals kreuzt, und wobei der Schwingkreis eine wenigstens zweimal gefaltete Rillenform aufweist, und wobei ein Ende der Rille nach außen hin offen ist, so dass die Ausgabeeinheit gebildet wird.

8. Terahertz-Strahlungsquelle nach einem der Ansprüche 1 bis 5, wobei der Schwingkreis (57) eine Resonanzstruktur mit gekoppelten Resonatoren aufweist, umfassend:
mehrere Resonatoren (57a), die auf jeder Seite des Schwingkreises angeordnet sind, wobei sich zwischen den Resonatoren ein Pfad befindet; und
mehrere Verbindungsabschnitte (57b), welche die Resonatoren verbinden; wobei
ein Elektronenstrahl entlang dem Pfad verläuft; und wobei
ein Ende der Resonatoren nach außen hin offen ist.

9. Terahertz-Strahlungsquelle nach einem der vorstehenden Ansprüche, ferner umfassend:
eine Abdeckung (20), welche den Schwingkreis abdeckt und optional wenigstens die Kathode, die Anode, den Kollektor und den Schwingkreis abdeckt.

10. Terahertz-Strahlungsquelle nach Anspruch 9, wobei die Abdeckung folgendes umfasst:
einen zweiten Schwingkreis (27) mit einer symmetrischen Struktur im Verhältnis zu wenigstens dem Schwingkreis (17).

11. Terahertz-Strahlungsquelle nach einem der vorstehenden Ansprüche, wobei wenigstens die Kathode (15, 35, 45, 55), die Anode (16, 36, 46, 56), der Kollektor (18, 38, 48, 58) oder der Schwingkreis (17, 37, 47, 57) eine Metallschicht aufweist, die auf eine geätzte Substratschicht aufgetragen ist.

12. Terahertz-Strahlungsquelle nach einem der vorstehenden Ansprüche, wobei die isolierende Schicht und die Substratschicht Schichten eines Silicon-on-Insulator(SOI)-Substrats sind.

13. Verfahren zur Herstellung einer monolithischen Terahertz-Strahlungsquelle, wobei das Verfahren folgendes umfasst:
Ätzen einer auf einer isolierenden Schicht (113) ausgebildeten Substratschicht (111), um eine oszillierende Elementschicht zu bilden, wobei das Ätzen das Ausbilden in der oszillierenden Elementschicht einer Kathodenregion (R1), die eine Kathode (15, 35, 45, 55) bereitstellt, die so gestaltet ist, dass sie einen Elektronenstrahl emittiert, aufweist; einer Anodenregion (R2), die eine Anode (16, 36, 46, 56) bereitstellt, die so gestaltet ist, dass sie den von der Kathode emittierten Elektronenstrahl fokussiert;
einer Schwingkreisregion (R3), die einen Schwingkreis (17, 37, 47, 57) bereitstellt, der zwischen der Anode und dem Kollektor positioniert ist, wobei der Schwingkreis so gestaltet ist, dass er Energie des emittierten Elektronenstrahls in elektromagnetische Wellenenergie umwandelt; und einer Kollektorregion (R4), die einen Kollektor (18, 38, 48, 58) bereitstellt, der so gestaltet ist, dass er den durch die Anode fokussierten emittierten Elektronenstrahl sammelt;
einer Ausgabeeinheit (19, 39, 49, 59), die so gestaltet ist, dass sie die elektromagnetische Wellenenergie extern emittiert; und
Ausbilden einer Elektronenstrahl-Emitterquelle (150) zum Erzeugen des Elektronenstrahls in der Kathodenregion der Substratschicht; und
**dadurch gekennzeichnet, dass** eine Elektronenstrahl emittierende Oberfläche (151) der Kathode, welche die Elektronenstrahl-Emitterquelle bereitstellt, senkrecht ist zu der Substratschicht, und wobei die Elektronenstrahl emittierende Oberfläche (151) konkav ist in Bezug auf die Emissionsrichtung des Elektronenstrahls, und wobei die Elektronenstrahl emittierende Oberfläche (151) eine zweidimensionale Oberfläche ist, die um eine Achse gekrümmt ist, die senkrecht zu der Substratschicht ist.

14. Verfahren nach Anspruch 13, wobei das Ausbilden der oszillierenden Elementschicht folgendes umfasst:
Unterteilen und Ätzen der Substratschicht in die Kathodenregion (R1), die Anodenregion (R2), die Schwingkreisregion (R3) und die Kollektorregion;
Auftragen einer Metallschicht (120) auf die Kathodenregion und die Anodenregion; und
Ätzen eines Teils der Substratschicht (111), ausgenommen der Kathodenregion, der Anodenregion, der Schwingkreisregion und der Kollektorregion, bis ein Teil der isolierenden Schicht (113) frei liegt.

15. Verfahren nach Anspruch 14, ferner umfassend das Strukturieren der Schwingkreisregion (R3), so dass diese wenigstens eine Struktur aufweist, die ausgewählt ist aus der Gruppe bestehend aus einer photonischen Resonanzstruktur, einer Nanoresonanzstruktur, einer Resonanzstruktur mit gekoppelten Resonatoren, einer Resonanzstruktur mit gefaltetem Wellenleiter, einer spiralförmigen Schwingstruktur, einer Rillenstruktur, einer Vorwärtswellenstruktur, einer Oberflächenplasmon-Anregungsstruktur und einer Metamaterialstruktur zum Oszillieren einer elektromagnetischen Terahertz-Welle.

## Revendications

1. Source de rayonnement térahertz monolithique sur une puce unique, comprenant :
une cathode (15,35,45,55) configurée pour émettre un faisceau d'électrons ;
une anode (16,36,46,56) configurée pour focaliser le faisceau d'électrons émis par la cathode ;
un collecteur (18,38,48,58) configuré pour la collecte du faisceau d'électrons émis focalisé par l'anode ;
un circuit oscillateur (17,37,47,57) positionné entre l'anode et le collecteur, le circuit oscillateur étant configuré pour convertir l'énergie du faisceau d'électrons passant émis en énergie d'ondes électromagnétiques ; et
une unité de sortie (19,39,49,59) configurée pour émettre extérieurement l'énergie d'ondes électromagnétiques ;
la cathode, l'anode, le collecteur, le circuit oscillateur et l'unité de sortie étant fournis comme une couche de substrat gravée monolithique (12) sur une couche isolante (13) ;
**caractérisée en ce qu'**une surface émettrice de faisceau d'électrons (151) de la cathode est perpendiculaire à la couche de substrat (12,32,42,52), et la surface émettrice d'un faisceau d'électrons (151) étant concave relativement à une direction d'émission du faisceau d'électrons, et la surface émettrice d'un faisceau d'électrons (151) étant une surface bidimensionnelle courbée autour d'un axe perpendiculaire à la couche de substrat.

2. Source de rayonnement térahertz selon la revendication 1, la cathode (15,35,45,55) comprenant :
une source sélectionnée dans le groupe comprenant une source d'émission de faisceau d'électrons du type à émission de champ, une source d'émission de faisceau d'électrons du type à émission d'électrons thermiques, et une source d'émission de faisceau d'électrons du type à photo-excitation.

3. Source de rayonnement térahertz selon une quelconque des revendications précédentes, le circuit oscillateur (17,37) possédant une structure de cristal photonique dans laquelle une pluralité de parties à extension verticale (17a,17b,37a) sont disposées dans un réseau bidimensionnel, et, en option, au moins un d'un agencement et une forme des parties à extension verticale (17a,17b) du circuit oscillateur positionné entre l'anode et l'unité de sortie est différent d'au moins une des parties à extension verticale du circuit oscillateur positionné entre l'unité de sortie et le collecteur.

4. Source de rayonnement térahertz selon la revendication 3, les parties à extension verticale (37a) du circuit oscillateur étant disposées de façon à former un guide d'ondes (37b) plié au moins deux fois, et un bout du guide d'ondes plié étant ouvert sur l'extérieur pour former l'unité de sortie.

5. Source de rayonnement térahertz selon une quelconque des revendications précédentes, l'unité de sortie (16,36,46,56) comprenant :
une fente formée adjacente à l'anode dans une zone où est positionné le circuit oscillateur ;
la fente pénétrant dans la couche isolante (13) et la couche de substrat (12).

6. Source de rayonnement térahertz selon une quelconque des revendications précédentes, le circuit oscillateur (17,37,47,57) possédant au moins une structure sélectionnée dans le groupe composé d'une structure à cristal photonique, une nanostructure à résonance, une structure à résonance à cavités couplées, une structure à résonance à guide d'ondes plié, une structure oscillante spiralée, une structure à cannelure, une structure à ondes vers l'avant, une structure à excitation plasmonique de surface et une structure méta-matérielle pour l'oscillation d'une onde électromagnétique térahertz.

7. Source de rayonnement térahertz selon une quelconque des revendications 1 à 5, le circuit oscillateur (47) possédant une structure à résonance à guide d'ondes plié telle que le circuit oscillateur traverse un chemin d'un faisceau d'électrons une pluralité de fois, et le circuit oscillateur ayant une forme de cannelure pliée au moins deux fois, et un bout de la cannelure étant ouvert sur l'extérieur de façon à former l'unité de sortie.

8. Source de rayonnement térahertz selon une quelconque des revendications 1 à 5, le circuit oscillateur (57) possédant une structure à résonance à cavités couplées comprenant :
une pluralité de cavités (57a) disposées de chaque côté du circuit oscillateur, avec un chemin entre les cavités ; et
une pluralité de parties de connexion (57b) connectant les cavités ;
un faisceau d'électrons passant le long du chemin, et
un bout des cavités étant ouvert sur l'extérieur.

9. Source de rayonnement térahertz selon une quelconque des revendications précédentes, comprenant en outre :
un couvercle (20) couvrant le circuit oscillateur et, en option, couvrant au moins la cathode, l'anode, le collecteur, et le circuit oscillateur.

10. Source de rayonnement térahertz selon la revendication 9, le couvercle comprenant :
un deuxième circuit oscillateur (27) possédant une structure symétrique relativement à au moins le circuit oscillateur (17).

11. Source de rayonnement térahertz selon une quelconque des revendications précédentes, au moins un des suivants : la cathode (15,35,45,55), the anode (16,36,46,56), le collecteur (18,38,48,58), et le circuit oscillateur (17,37,47,57) comprenant une couche métallique revêtue sur une couche de substrat gravée.

12. Source de rayonnement térahertz selon une quelconque des revendications précédentes, la couche isolante et la couche de substrat étant des couches de substrat à silicium-sur-isolant (SOI)

13. Méthode de fabrication d'une source de rayonnement térahertz monolithique, cette méthode comprenant :
la gravure d'une couche de substrat (111) formée sur une couche isolante (113) pour former une couche à élément oscillateur, la gravure comprenant le formage, dans la couche de l'élément oscillateur, d'une zone à cathode (R1) comportant une cathode (15, 35, 45, 55) configurée pour émettre un faisceau d'électrons ; une zone à anode (R2) comportant une anode (16, 36, 46, 56) configurée pour focaliser le faisceau d'électrons émis par la cathode ; une zone à circuit oscillateur (R3) comportant un circuit d'oscillateur (17, 37, 47, 57) positionné entre l'anode et le collecteur, le circuit oscillateur étant configuré pour convertir l'énergie du faisceau d'électrons émis en énergie d'onde électromagnétique ; et une zone de collecteur (R4) comportant un collecteur (18, 38, 48, 58) configuré pour assurer la collecte du faisceau d'électrons émis focalisé par l'anode ;
une unité de sortie (19, 39, 49, 59) configurée pour l'émission extérieure de l'énergie d'onde électromagnétique ; et
la formation d'une source d'émissionde faisceau d'électrons (150) assurant la génération du faisceau d'électrons dans la zone de cathode de la couche de substrat ; et
**caractérisée en ce qu'**une surface émettrice de faisceau d'électrons (151) de la cathode, constituant la source d'émission de faisceau d'électrons, est perpendiculaire à la couche de substrat, et
la surface émettrice de faisceau d'électrons (151) étant concave relativement à la direction de l'émission du faisceau d'électrons, et la surface émettrice de faisceau d'électrons (151) étant une surface bidimensionnelle courbée autour d'un axe perpendiculaire à la couche de substrat.

14. Méthode selon la revendication 13, la formation de la couche de l'élément oscillateur comprenant :
la division et la gravure de la couche de substrat dans la zone à cathode (R1), la zone à anode (R2), la zone à circuit oscillateur (R3), et la zone à collecteur ;
le revêtement d'une couche métallique (120) sur la zone à cathode et la zone à anode ; et la gravure d'une partie de la couche de substrat (111), sauf en ce qui concerne la zone à cathode, la zone à anode, la zone à circuit oscillateur et la zone à collecteur, jusqu'à ce qu'une partie de la couche isolante (113) soit exposée.

15. Méthode selon la revendication 14, comprenant en outre la modélisation de la zone à circuit oscillateur (R3) afin de disposer d'au moins un structure sélectionnée parmi celles du groupe suivant : une structure à cristal photonique, une nanostructure résonante, une structure à résonance à cavité couplée, une structure à résonance à guide d'ondes plié, une structure oscillante spiralée, une structure à cannelure, une structure à onde vers l'avant, une structure à excitation plasmonique de surface, et une structure méta-matérielle pour l'oscillation d'une onde électromagnétique térahertz.
